# EUROPEAN PATENT APPLICATION

(11) **EP 0 894 437 A1**
(43) Date of publication of application: **03.02.1999**
(21) Application number: 98610025.3
(22) Date of filing: 27.07.1998
(51) Int. Cl.: A22B 5/16

(54) **Apparatus for skinning fur-bearing animals**

(30) Priority: 25.07.1997 DK 89197
(71) Applicant: Peis Maskinfabrik A/S, 9230 Svenstrup J (DK)
(72) Inventor: Graver, Kaj, Gjol, 9440 Abybro (DK)
(74) Representative: Pedersen, Soeren Skovgaard

(57) **Abstract**

An apparatus for skinning fur-bearing animals, in particular mink, comprising holding means (25) from which an animal may be suspended with the hind paws, said holding means being mutually movable to stretch the hindquarters of the animal, a movable knife (43) adapted to make a cut from one paw across the hindquarters to the other paw, a skin loosening means (76) adapted to loosen the skin on the stomach through the cut made, a knife device having two knives (77) preferably rotating in opposite directions, said knifes (77) cutting the anus and the testicles, if any, free in a first operation and cutting the tail of the animal longitudinally in the second operation, a set of grippers (96) intended to engage the legs of the animal and a second set of grippers (66) intended to engage the skin, said two sets of grippers being adapted to the moved mutually to strip the skin from the body. The apparatus permits skinning of an animal in one working procedure, while previously several individual subprocesses have been required.

## Description

The present invention relates to an apparatus of skinning killed fur-bearing animals, in particular mink.

DK 165 768 B, WO 88/02601 and US-A 4 099 294 disclose various apparatuses for skinning fur-bearing animals. These apparatuses require that the hindquarters of the animals have been cut beforehand in order for the skin to be peeled off. The skin is stripped from the body in one piece over the head of the animal so that the fat side of the skin will face outwards during the stripping. The cutting may e.g. be performed with devices as shown and described in DK 166 476 B1 and DK 168 555 B1, in which the animal with the hind paws are suspended from two mutually slidable paw holders. In the stretched state of the hindquarters, a cut is made from one paw across the hindquarters to the other paw. In the device of DK 168 555 B1, the anus and the testicles, if any, may also be cut free, otherwise this is done manually. A device as shown and described in DK 94 00279 U3 may be used for the slitting of the tail. After cutting, skinning is performed with the above-mentioned apparatuses. Skinning of an animal thus involves several individual operations. When skinning with the known apparatuses manual surgical interventions are moreover necessary during the skinning. In case of the apparatus of DK 165 768 it is necessary manually to cut the skin free, e.g. in the head region, with a knife.

The object of the invention is to provide an apparatus which permits skinning to be performed in a single operation.

This is achieved by an apparatus according to the invention which is characterized in that it comprises holding means from which an animal may be suspended with the hind paws, said holding means being mutually movable to stretch the hindquarters of the animal, a movable knife adapted to make a cut from one paw across the hindquarters to the other paw, a skin loosening means adapted to loosen the skin on the stomach through the cut made, a knife device having two rotating knives which cut the anus and the testicles, if any, free in a first operation and cut the tail of the animal longitudinally in the second operation, a set of grippers intended to engage the legs of the animal and a second of grippers intended to engage the skin, said two sets of grippers being adapted to be moved mutually to strip the skin from the body.

This apparatus allows an animal to be skinned in a single operation. The operator initially has to place the animal with the paws in the holders intended therefor, following which the entire flaying takes place automatically. Finally, the operator is just to remove the stripped skin and the naked body from the apparatus.

The invention will be explained more fully below in connection with a description of an apparatus particularly for use in the skinning of mink and with reference to the accompanying drawing. In the drawing:

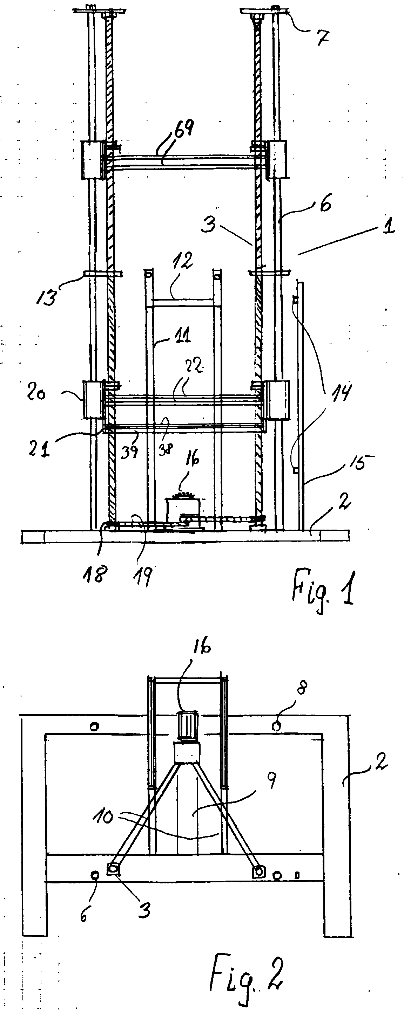

- Fig. 1: shows a schematic view of the apparatus seen from the front,
- fig. 2: shows the apparatus as shown in fig. 1, seen from above without uppermost L-shaped stringers,

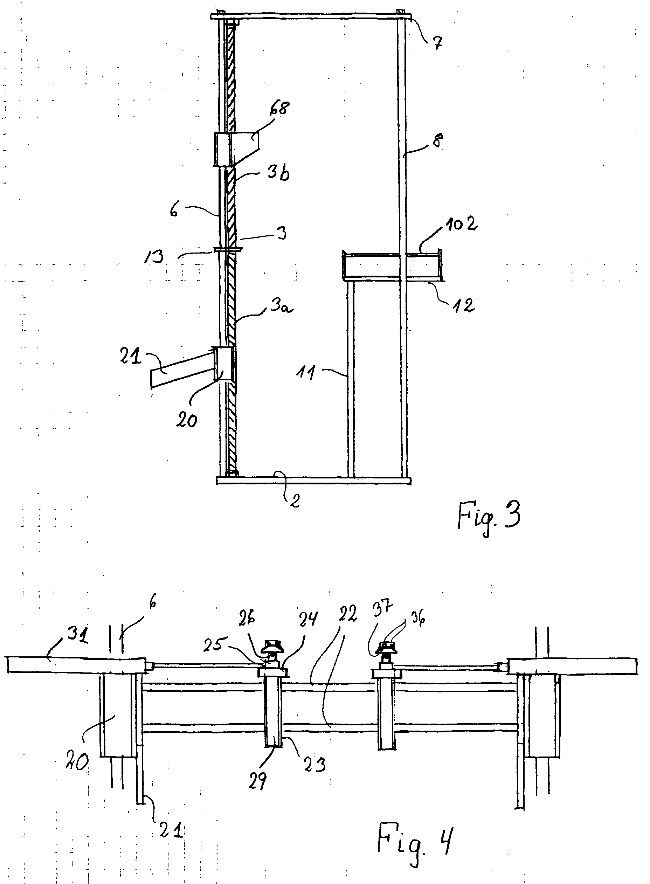

- fig. 3: shows the apparatus as shown in fig. 1, seen from the side,

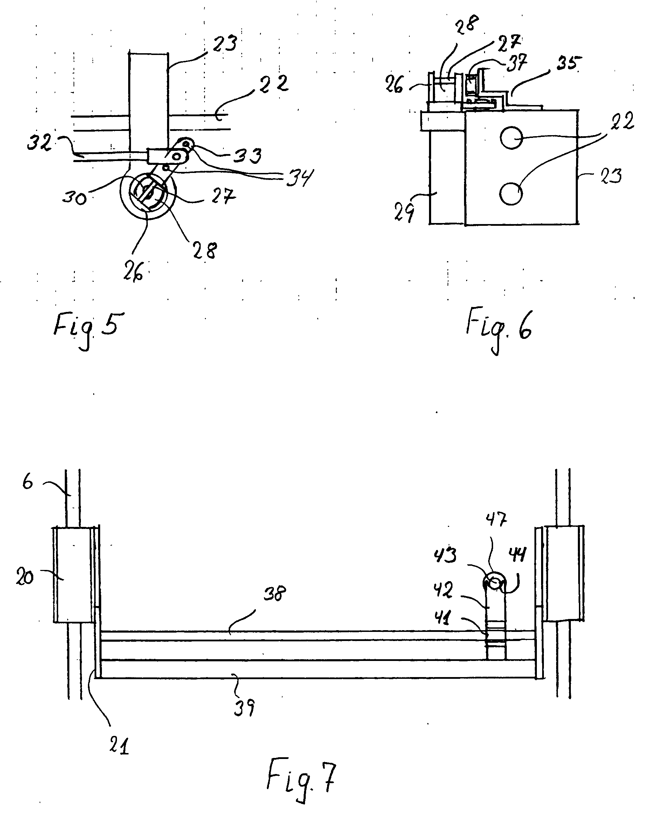

- fig. 4: shows the paw holder arrangement seen from the front,
- fig. 5: shows a paw holder seen from above, but without the uppermost bracket,
- fig. 6: shows the paw holder seen from the side,

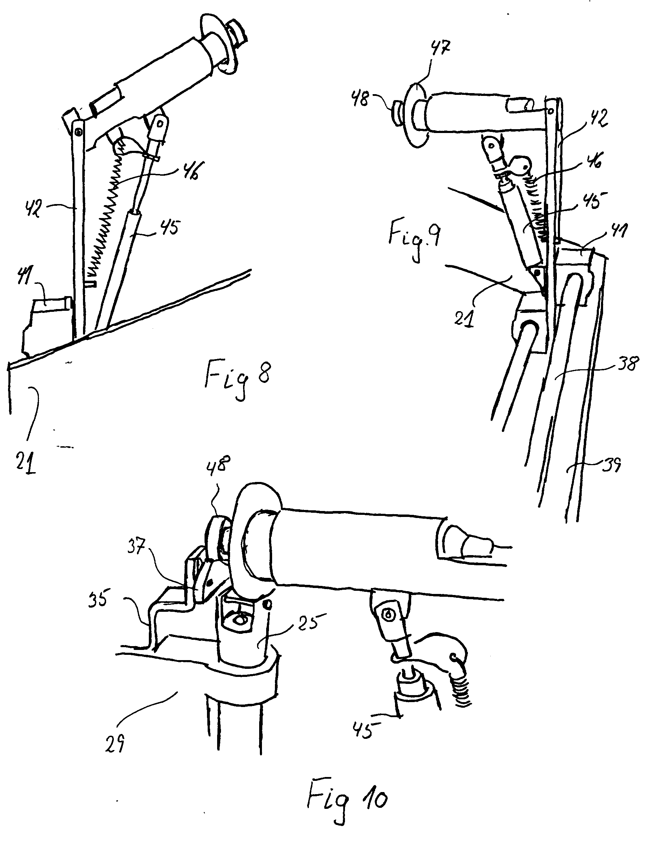

- fig. 7: shows the knife arrangement for making a cut from hind paw to hind paw across the hindquarters of the animal,
- fig. 8: shows the knife of the knife arrangement in the starting position,

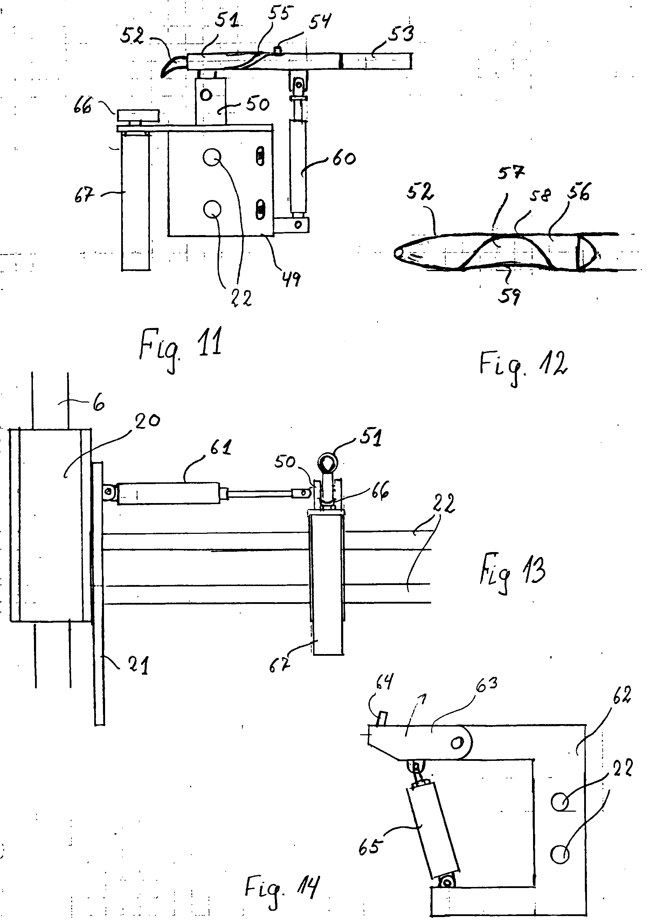

- fig. 9: shows the knife as shown in fig. 8, in a downwardly pivoted cutting position,
- fig. 10: shows the knife as shown in fig. 9 when it passes a paw holder,
- fig. 11: shows a device for loosening the femoral muscle seen from the side,
- fig. 12: shows a loosening means for the device of fig. 11,
- fig. 13: shows the device of fig. 11 seen from the front,

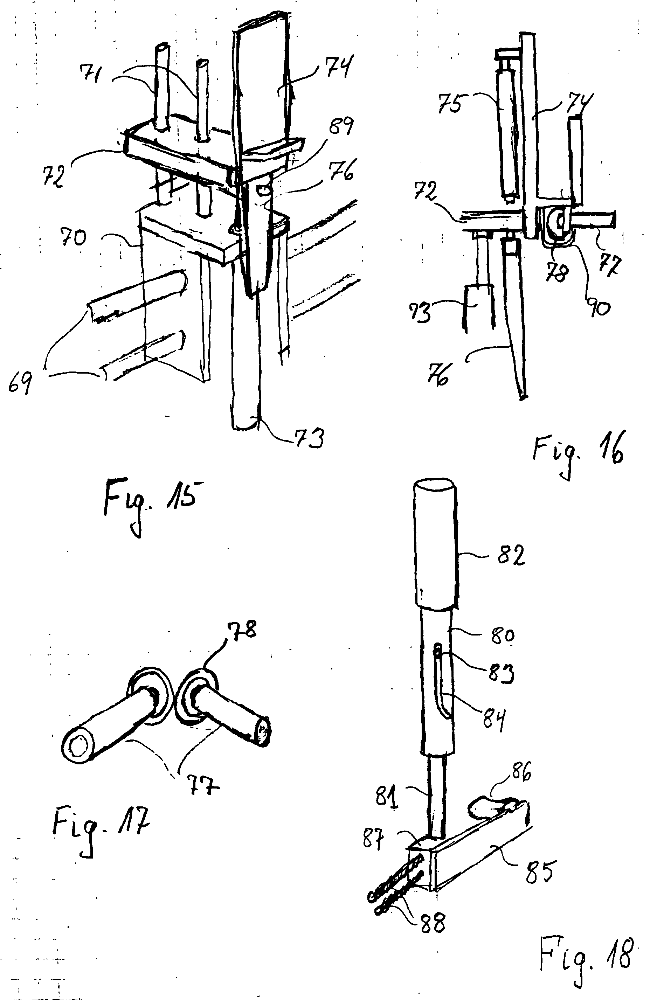

- fig. 14: shows a device for keeping the skin down in the cut in the hindquarters of the animal and acting as a counter rest for the femoral muscle,
- fig. 15: is a perspective view of the skin loosening means for loosening the skin on the stomach of the mink,
- fig. 16: shows the skin loosening means of fig. 15 seen from the side,
- fig. 17: shows a perspective view of angularly positioned knives for cutting the anus free,
- fig. 18: shows a perspective view of a device for capturing and guiding the tail for cutting,
- fig. 19: shows a device seen directly from the front for gripping and clamping the legs of a mink,

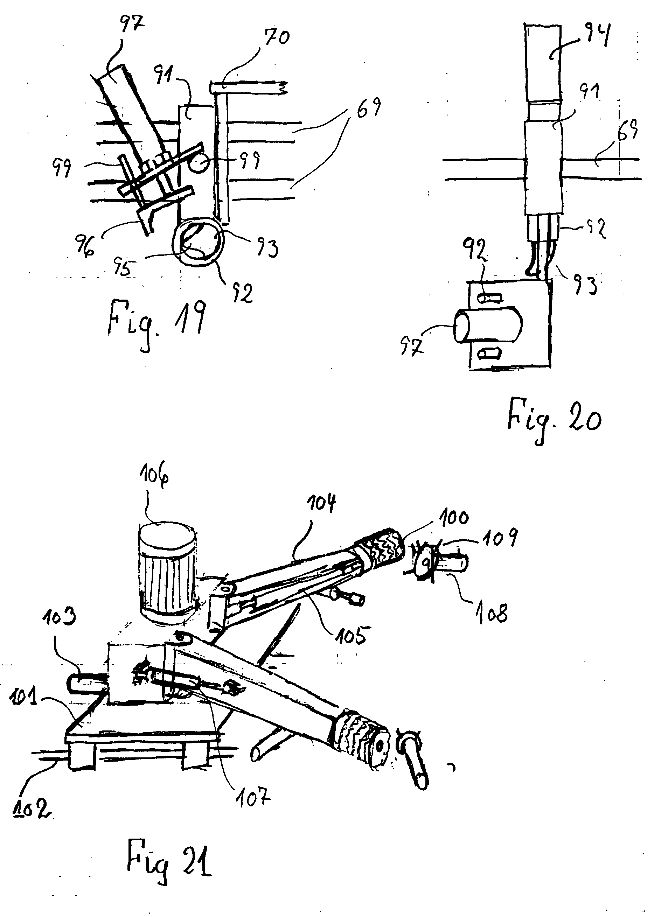

- fig. 20: shows the device of fig. 19 seen directly from above, and
- fig. 21: shows a device with rollers for clamping the side of the body and pulling it upwards.

The apparatus comprises a frame 1 with a bottom framework 2 in which an upright spindle device 3 is mounted in each side, said spindle device carrying and driving a first assembly 4 and a second assembly S positioned thereabove. A slide rod 6 serving as a guide for the two assemblies is arranged in association with the spindles. At the top, each spindle device is mounted in an L-shaped stringer 7 which is secured to the slide rod and is carried at the rear by a column 8 secured to the rear side of the bottom framework. A central member 9 extends between the rear and front members of the bottom framework and has mounted thereon the drive arrangement of the spindle devices. Two side members 10 are provided on each side of the central member and centrally mount a column 11, and two similar columns are arranged on the rear member. These four columns carry a framework 12 for an assembly for pull rollers, which will be explained later.

The spindle devices consist of two spindle sections, viz. a lower spindle section 3a and an upper spindle section 3b. The height of the lower spindle section corresponds to a convenient working position for the lowermost assembly for the suspension of a mink with the hind paws therein. Where the two spindle sections meet, a bracket 13 is provided between the spindle device 3 and the associated slide rod 6. The bracket stabilizes the spindle devices and determines the uppermost position of the lowermost assembly and the lowermost position for the uppermost assembly. The threads are left-handed and right-handed, respectively, on the two spindle sections, so that the lowermost assembly is lowered while the uppermost assembly is raised when the spindle devices are caused to rotate. The skin of the mink is secured to the lowermost assembly and the body to the uppermost assembly. When the two assemblies are displaced mutually, the skin is taken off the body. As the skin is elastic, the mink as a whole will tend to be pulled up, which is not expedient. To maintain the original position with a tendency of moving down into the mink, the lowermost spindle section 3a is formed with a larger diameter than the uppermost section 3b, so that the lowermost assembly is moved downwards at a greater speed than the one at which the uppermost assembly is moved upwards, thereby compensating for the elasticity of the skin so that this is pulled off the body rather than the body being pulled out of the skin. The travel of the lowermost assembly is determined by two end stop switches 14, e.g. reed switches arranged on a vertical rail 15 at one spindle device. The switches cooperate with a bracket on the lower spindle section. The lowermost end stop switch may be omitted and be replaced by a potentiometer for manual control of the travel of the assembly, thereby allowing the travel to be adapted to the size of the individual animals.

The spindle devices are chain-driven by a common electric motor 16 with a reduction gear 17, mounted on the central member of the bottom framework. The lower end of the spindle devices has secured thereto a chain wheel 18 from which a chain 19 extends to a chain wheel of its own on the reduction gear. It is hereby ensured that the spindle devices are driven synchronously and thereby prevent the assemblies from running askew and getting wedged.

The lowermost assembly is mounted on brackets 20 on the slide rods and is capable of sliding up and down these, as they, connected to the nuts on the lower extent of the spindle devices, are carried and controlled by these. The brackets are formed by blocks of nylon having plane mounting faces arranged in a square.

Two forwardly directed arms 21 are secured to the mounting faces of the brackets facing each other. Two horizontal and parallel slide rods 21 positioned above each other are secured between the arms. A pair of slidable mounting blocks 23 are arranged on these rods, there being a downwardly facing eye 24 at the top on the front in which a paw holder 25 is mounted. This comprises a rotatable cylindrical member, there being two parallel upwardly protruding side walls at the top between whose upper parts a transverse stop 27 in the form of a bolt is provided. The side walls, the stop and the upper edge of the cylindrical member form a hole 28 through which the paw of a mink may be passed. The other end of the cylindrical member mounts an air cylinder 29 whose piston 30, when activated, presses the paw against the overlying stop to hold the mink at its paws. To stretch the hindquarters of the animal, the paw holders may be pulled out to their respective sides of the apparatus. This takes place by means of a horizontal air cylinder 31 mounted on the outer side of the respective brackets on the vertical slide rods. The end of the piston rods 32 is secured by a fork bracket to a short rearwardly directed arm 33 on the cylindrical member of the paw holder. The angular rotation of the paw holder is determined by two pins 34 in the arm on each side of the fork bracket of the piston rod. In the starting position, the paw holders are approximately at the centre of the apparatus, with the paw openings turned at an angle out from the apparatus, which facilitates the insertion of the paws. When the cylinders pull the paw holders out to the side, these are simultaneously turned so that the paw openings are parallel with the guide rods.

A bracket 35 is secured on top of the mounting blocks of the paw holders, said bracket having a vertical mounting face at and above the paw holders. The mounting face, which is provided with two elongate screw holes 36, has secured thereto a triangular curve disc 37 for cooperation with a cutter knife, as will be described below.

An uppermost slide rod 38 and below this an air cylinder 39 without piston rod extend at the outer ends of the two forwardly directed arms on the brackets and between these, and a further slide rod 40 is provided behind the air cylinder toward the apparatus. A slide block 41 is arranged on each of the two slide rods, and an upwardly extending mounting bracket 42 in the form of a plate member is mounted on the two faces facing each other. An air driven knife 43 in a cylindrical housing is mounted with its end in a semicircular incision 44 at the top of the plate member. The knife is rotatably mounted about a horizontal axis so that its front end may be lifted. An air cylinder 45 for lifting the knife is mounted between the underside of the knife and the rear side of the plate element in alignment with the uppermost slide block. A screw spring 46 is mounted in parallel with the air cylinder behind this, and the lower end of this screw spring is secured to the plate member and the upper end to a short arm which protrudes from the piston rod. The spring serves to keep the knife down in the cutting position. A circular cutting edge 47 driven by the air motor of the knife is provided on the front end of the knife. A wheel 48 in the form of a ball bearing, whose effect will be described later, is mounted in front of the cutting edge.

At its lower end, the mounting bracket is connected with the air cylinder so that the assembly and thereby the knife as a whole may be moved to and fro. The knife is pivoted upwards in the starting position, and then it is pivoted downwards to make a cut in the hindquarters of the mink from one paw to the other when the knife is moved by means of the drive cylinder. To ensure uninterrupted and sufficiently deep cutting of the hindquarters of the animal, the knife goes deeper than the stop on the paw holders. When the knife approaches the first paw holder, the wheel forwardly on the knife runs on to the triangular curve disc on the paw holder and thereby lifts the knife so that the cutting edge clears the stop, and subsequently the knife is lowered again. The same procedure is repeated at the meeting with the next paw holder. The knife is parked at the opposite end of the starting position, and from there it will make the hindquarters cut in the next animal.

To release the femoral muscles from the skin, another set of mounting blocks 49 are arranged within the paw holder mounting blocks on the slide rods thereof. The upper side of the mounting blocks has secured thereto a horizontal flat steel member with two upright bearing pedestals 50 positioned above the slide rods. The device to release the femoral muscle from the skin is tiltably mounted on the bearing pedestals. The device comprises a cylindrical housing 51 whose front end has secured thereto a downwardly directed flat steel member fitting between the bearing pedestals and through which a shaft extends. A specially constructed loosening means 52 is movably mounted in the cylindrical housing. This means may be moved forwards by an air cylinder 53, and during the forward movement it rotates about its own longitudinal axis, said loosening means having a pin 54 which is guided in a slot 55 formed in the cylindrical housing. The front of the loosening means tapers, and, seen in the starting position, the outer end extends downwards and forwards. The loosening means 56 is flat on the underside of the protruding portion from the outer end and inwards, there being formed an oblique hollow 57 extending from the outer edge 56 and upwards out on the cylindrical part 59 of the loosening means. The cylindrical housing with the loosening means may be tilted forwards by means of an air cylinder 60 mounted at the bottom on the rearmost vertical narrow edge on the mounting block and with the piston rod secured to the rear end of the cylindrical housing. When activated, the loosening device tilts forwards, and the loosening means is moved forwards. The loosening means rotates during the forward movement so that, when it is inserted into the cut previously made in the hindquarters of the mink, the tip has a horizontal orientation, i.e. the tips of the two loosening means face away from each other. During the further extension, the loosening means rotates additionally, so that the tip protrudes from the other side of the femoral muscle, which is now present in the hollow on the loosening means. The edge of the hollow is in the form of a cutting edge and cuts the femoral muscle from the skin. For this purpose, the loosening device may be pulled to and fro by an air cylinder. The air cylinder is secured with the housing to the arms of the brackets on the vertical slide rods, while the piston rod is secured to the outermost one of the two bearing pedestals for the housing of the loosening means. To loosen the femoral muscles, the loosening device is reciprocated a plurality of times, preferably three to five times. To ensure uniform positioning of the loosening means, these are connected with an endless chain which is run around a chain wheel mounted on the rear side of the slide blocks 20. The chain extends through openings in the mounting blocks and is secured with the upper run and the lower run to the one mounting block and to the other mounting block, respectively.

To facilitate the insertion of the loosening means, two devices for keeping the skin down are arranged within said devices. These devices comprise their respective mounting blocks 62 fixed on the two horizontal slide rods. The blocks also have a stabilizing effect on the slide rods. On the upper side of the mounting blocks there is a forwardly directed arm whose end mounts a pivot link 63 carrying a pin 64 at the end. An air cylinder 65, whose piston rod is secured to the pivot link, is secured to the lower end of the mounting blocks. Activation of the air cylinder causes the pivot link to be pivoted up to a vertical position, whereby the pin extends inwardly over the skin edge in the cut previously made. In the active position, the pin assumes a slightly upwardly inclined position toward the pivot link, so that the skin edge automatically moves inwards below the pin toward the pivot link. When the loosening means is inserted to loosen the femoral muscle, the pin serves to keep the skin down.

To strip the skin, a clamping device is mounted on the mounting blocks for the skin loosening devices. This device comprises a clamping jaw 66 in the form of an upwardly directed groove-shaped member whose curvature and direction are adapted to the loosening means. The clamping jaws are secured on the end of a vertically arranged air cylinder 67 just below the loosening means. The air cylinders are secured in the flat steel member which is disposed across the mounting blocks, and which, for the same purpose, extends in front of these. When the air cylinders are activated, the clamping jaws are moved up toward the loosening means, which still have the cylindrical side downwards, and clamp the skin against these.

Now the uppermost assembly will be described. This is also mounted on brackets on the slide rods and is capable of sliding up and down these, since they, connected with the nuts on the upper extent of the spindle devices, are carried and controlled by these. The brackets are formed by blocks of nylon with plane mounting faces arranged in a square.

The faces of the brackets facing each other mount two rearwardly directed short arms 68, and two horizontal and parallel mounting rods 69 arranged above each other extend between these. A mounting block 70, which consists of two transverse plate members with a horizontal plate member thereon, is secured to the centre of these mounting rods. Two vertical guide rods 71 are arranged behind each other on this mounting block. A raisable and lowerable guide block 72 is provided on these guide rods. An air cylinder 73, whose piston rod is connected with the underside of the guide block, is arranged at the front on the mounting block to perform the movement. The front end of the guide block has secured thereto a mounting plate 74 in extension of which a downwardly extending double wedge-shaped skin loosening means 76 is secured by two air cylinders, intended to penetrate on the stomach side of the mink between the skin and the body. The air cylinders are arranged on the rear side of the mounting plate. When the cylinders are activated, the skin loosening means is moved a distance down with respect to the mounting plate. The skin loosening means, in a lower position, may hereby be moved a further distance downwards, which facilitates the insertion of the loosening means for the femoral muscles. The insertion of the skin loosening means takes place through the transverse cut previously made in the hindquarters of the animal. The skin loosening means is plane on the front side facing the stomach of the animal and wedge-shaped on the opposite side. Downwardly, the means is likewise slightly wedge-shaped. Upwardly, the skin loosening means has a rectangular cross-section and is relatively thick to provide a large opening between the skin and the body. An embodiment of the skin loosening means is about 26 mm thick at the top and about 3 mm thick at the bottom, about 85 mm wide at the top and about 50 mm at the bottom and about 225 mm long, and the inclined side face is about 130. When the assembly as a whole is lowered, the skin loosening means, as mentioned before, is moved through the cut in the hindquarters to loosen the skin on the stomach side of the mink. When the associated air cylinder is activated, the skin loosening means is raised and pulled out of the animal.

To cut the anus and the testicles, if any, free, two angularly positioned knives 77 are arranged in connection with the skin loosening means so that the knives taper forwardly. The knives form a mutual angle of about 65 degrees. These knives, which are air driven, have a rotating vertical cutting edge 78 and are mounted below a horizontal mounting plate 79, which projects from the mounting plate carrying the skin loosening means and at the lower edge of this plate. The cutting edges of the knives are driven in opposite directions, which contributes to stretching the skin during the cutting operation, which makes it proceed more easily. When the skin loosening means is inserted almost completely, the knives meet the hindquarters of the mink, and during the final insertion of the skin loosening means the angular cut is made, extending out to the transverse cut previously made.

Cutting of the tail, which takes place with a cut in the longitudinal direction of the tail, is performed with two angularly positioned knives. Between these, a vertical cylindrical housing 80 with a rod 81 mounted therein is secured to the horizontal mounting plate. The uppermost end of the housing has secured thereto a cylinder 82 whose piston rod is connected with the rod, so that this may be extended from and retracted into the housing. The rod is formed with a boss 83 which enters into and is guided in a slot 84 in the housing. A short arm 85 carrying a roller 86 is provided on the end of the rod. The arm is provided on a block 87 which is guided by two guide pins 88 on the rod. A screw spring is provided around the guide pins to load the arm. The free end of the roller is conical to facilitate the capture of the tail of the mink. The roller is formed with a groove in which the tail is guided. When the rod is in its extended position, the boss together with the guide slot causes the roller to be rotated to the side. When the mentioned triangular cut has been made with the angularly positioned knives, the rod is pulled up, whereby the roller rotates inwards below the tail of the mink at the root thereof and moves it toward the angularly positioned knives. Here the roller is pressed against two fixed circular plates via the spring load which are provided behind the cutting edges near the housing. The roller thus automatically adapts itself to the varying thickness of the tail. To prevent the tail from being caught in the angular space between the two knives, a mandrel 89 with a rounded front end closing the angular space is provided between these. When the wedge-shaped skin loosening means is raised, the roller and the angularly positioned knives will also be moved upwards. During this movement the tail of the mink will run over the roller, whereby it is cut by the knives in the longitudinal direction. To ensure that the tail gets up on the roller and remains there, a downwardly extending hanger 90 is arranged on the opposite side of the roller as a counter rest for the tail.

Two additional mounting blocks 91 are secured on the two parallel mounting rods on each side of the mounting block of the skin loosening means and the other mentioned elements. The lower edge of the additional mounting blocks mounts a tubular housing 92 in which an extensible mandrel 93 is seated. This is activated by an air cylinder mounted on the rear end of the tubular housing. The ends 95 of the mandrels taper and curve away from each other. A clamping jaw 96 is arranged above the mandrels and for cooperation with them, said clamping jaw being provided on the end of an air cylinder 97 This is mounted in a plate member secured to a rod 98 which protrudes from the mounting blocks. The clamping jaws are guided by two guide pins 99 which extend through guide holes in the plate members. The clamping jaws are arranged obliquely so as to point toward each other. The clamping jaws have an upper plane section for cooperation with the upper side of the mandrels and an angular section which acts against the outer side of the mandrels. When the femoral muscles have been exposed and the loosening means retracted, the mandrels discussed here are moved forwards below the legs, and the clamping jaws press the legs against the mandrels. The uppermost assembly is then run upwards, pulling the body upwards, while the lowermost assembly is run downwards, pulling the skin downwards.

A relatively great pull is applied to the body, which may cause the body to burst, which should be avoided of course, since then the skin will most probably have to be rejected. To counteract this, there is provided an auxiliary means with two driven pull rollers 100 which extend into and clamp the body. The rollers are driven in opposite directions, and the directions of rotation are such as contribute to pulling the body upwards. The rollers are formed by nine gear wheels, in sets of three. The rollers are mounted on a slide 101 which is carried by two guide rods 102 mounted on the initial four short columns. The slide is reciprocated by an air cylinder 103 arranged below the slide. The cylinder is secured to the frame at the rear, while its piston rod is secured to the slide at the front. The rollers are seated at the end of an arm 104 which is pivotally mounted about a vertical axis at the opposite end. The rollers are mounted on a shaft which extends within the arms and is driven by an electric motor 106 via a gearbox. The arms may be pivoted by an air cylinder 107 whose one end is secured to a rod member, which protrudes from the gearbox, and whose piston rod is secured to the outer side of the arms. In a retracted parking position, the arms are pivoted to the side. Upon activation, the slide and thereby the arms are moved forwards and are pivoted toward the body of the mink.

To cut the skin free in the head region, a special cutting device 108 is mounted in front of the rollers. The device 108 is driven by an electric or air motor and comprises a cutting head with four protruding wires or strands 109 which perform the cutting operation. The cutting device is secured at the end of an arm, mounted on the outer side of the arms of the rollers and in such a manner that the cutting head assumes an inclined position with the lower edge extending toward the animal.

The apparatus is equipped with a PLC control or similar control for controlling and monitoring the functions of the apparatus. The apparatus is mainly air and electrically driven, but nothing prevents the apparatus from being driven in another manner than the one described above. For example, the air cylinders may be replaced by hydraulics or linear actuators.

The mode of operation of the apparatus is generally as follows:
An animal is placed with the hind paws in the paw holders, and these are then run laterally to stretch the hindquarters of the animal. The femoral muscle looseners are moved out to make room, and the knife is moved to the other side to make a transverse cut in the hindquarters of the animal. The wedge-shaped loosening means extends down into the cut and loosens the skin on the stomach side of the animal, and the anus and testicles, if any, are cut free at the same time by the angularly positioned knives. The device with the roller captures the tail and holds it against the two angularly positioned knives. The wedge-shaped loosening means is raised, during which movement the tail is cut longitudinally. The device to loosen to the femoral muscles is activated, and the device to hold the skin and support the femoral muscles is activated at the same time. The wedge-shaped loosening means is driven down again and moved out to provide an additional opening for the femoral muscle looseners, which tilt upwards, move in, rotate and tilt down again. The loosener is then reciprocated a plurality of times. The wedge-shaped skin loosening means is pulled up again. The leg grippers are moved forwards, and the associated clamping jaws are activated to clamp the legs. The clamping jaws for the femoral muscle loosener are activated to clamp the skin. The paw holders are loosened to release the paws. The two devices then move away from each other, pulling the body upwards and the skin downwards, respectively. The body rollers are activated, moving forwards to clamp the body and pull it upwards. The two assemblies then stop, whereby the various devices return to the starting position. To facilitate removal of skin and body, the clamping devices may be deactivated manually.

## Claims

1. An apparatus for skinning killed fur-bearing animals, in particular mink, **characterized** in that it comprises
a first device having
- holding means from which an animal may be suspended with the hind paws, said holding means being mutually movable to stretch the hindquarters of the animal,
- a movable knife adapted to make a cut from one paw across the hindquarters to the other paw,
- a set of grippers intended to grip and hold the skin,
a second assembly having
- a knife device having two knives preferably rotating in opposite directions, said knives cutting the anus and testicles, if any, free in a first operation and cutting the tail of the animal longitudinally in the second operation,
- a skin loosening means adapted to loosen the skin on the stomach through the cut made,
- a set of grippers intended to grip and hold the animal at its legs,
said two assemblies being adapted to be moved mutually to strip the skin from the body.

2. An apparatus according to claim 1, **characterized** in that the two assemblies are suspended from and driven by a spindle device with a lower spindle section and an upper spindle section having right-handed threads and left-handed threads, respectively.

3. An apparatus according to claim 2, **characterized** in that the lower spindle section has a larger diameter than the upper section so that the lower assembly is moved at a greater speed than the upper one.
